# EUROPÄISCHE PATENTSCHRIFT

(11) **EP 1 271 729 B1**
(45) Veröffentlichungstag und Bekanntmachung des Hinweises auf die Patenterteilung: **21.06.2006**
(21) Anmeldenummer: 02020379.0
(22) Anmeldetag: 04.11.1996
(51) Int. Cl.: H02G 1/12

(54) **Abisoliervorrichtung**
Insulation stripping device
Dispositif de dénudage

(30) Priorität: 06.11.1995 CH 323595
(43) Veröffentlichungstag der Anmeldung: 02.01.2003
(62) Teilanmeldung aus: 96938061.7
(73) Patentinhaber: Schleuniger Holding AG, 3608 Thun (CH)
(72) Erfinder: Locher, Beat, 3700 Spiezwiler (BE) (CH)
(74) Vertreter: Rosenich, Paul

(56) Entgegenhaltungen:
- EP-A- 0 234 929
- EP-A- 0 423 443
- EP-A- 0 489 502
- EP-A- 0 499 753
- EP-A- 0 576 966
- EP-A- 0 627 801
- WO-A-95/13641
- US-A- 4 275 619

## Beschreibung

Die Erfindung betrifft eine Trenn- und Abisoliervorrichtung zur Kabelverarbeitung, mit der Kabel durchtrennt bzw. deren Isolierschicht eingeschnitten und abgezogen werden kann.

Insbesondere betrifft sie eine Abisoliervorrichtung nach dem Oberbegriff des Anspruches 1. Solche Vorrichtungen sind bekannt.

Da diese Anmeldung eine Teilanmeldung zur EP-96938061.7-2207 (Publikationsnummer EP860044) ist, wird hinsichtlich des Standes der Technik auf die dortigen Ausführungen verwiesen. Ausserdem zeigt EP-A2-234929 eine schwenkbare rohrförmige Führung, deren Schwenkachse beim Schwenken in der Kabelführungsachse (Kabelweg) bleibt. Die US-A-4275619 zeigt eine zweiteilige öffenbare Führung.

Probleme ergeben sich im Stand der Technik ebenso beim Auswurf des Abfalls (Slug) an Isolationsresten, die durch die Messer vom Leiter abgezogen werden und bisher fallweise nicht ordentlich entfernt wurden.

Ein weiteres Problem ergibt sich, dass bei bekannten Führungen mit starren Innendurchmessern (z.B. Eubanks 9800) dünnere, flexible Kabel nicht zentrisch geführt werden, was zu Problemen (häufigere Pannen) beim Kabelvorschub führen kann.

Der Erfindung liegt somit die Aufgabe zugrunde, eine verbesserte Abisoliervorrichtung zu schaffen, die hinsichtlich der Universalität verbessert ist, grössere Abisolierlängen erlaubt und die Nachteile bei den oben erwähnten Konstruktionen vermeidet.

Durch die erfindungsgemässe Vorrichtung mit den Merkmalen des Anspruches 1 wird diese Aufgabe gelöst. Die neuen Führungen und deren Antrieb führen zu einer universellen, vollautomatisch tätigen und frei programmierbaren Trenn- bzw. Abisoliermöglichkeit. Diese wird durch zusätzliche, neue Verarbeitungsschritte bei Bedarf noch ergänzt. Bekannte Nachteile sind vermieden. Auch die erfindungsgemäss mögliche kompakte Bauform wirkt sich in der Praxis günstig aus.

Weitere Merkmale der Erfindung sind in den abhängigen Ansprüchen beschrieben bzw. ergeben sich aus den nachstehenden Angaben, die mit den Ansprüchen, der Figurenbeschreibung und der Zeichnung die gesamthafte Offenbarung der zum Teil auch unabhängig voneinander einsetzbaren Merkmale der Erfindung darstellen.

Bei einer besonderen Ausführung sind beliebige Werkzeugpositionen seitlich nebeneinander vorgesehen. Mit einer Schrittmotorsteuerung sind diese Werkzeugpositionen programmierbar angesteuert, so dass einerseits in unterschiedlichen Werkzeugpositionen das Kabel - oder auch mehrere nebeneinander liegende Kabel - das, bzw. die in einer Position gehalten werden, bearbeitet werden können. Das gilt für Endloskabelverarbeitungen ebenso wie für jene Abisoliervorrichtungen, an denen eine Bedienperson oder ein Manipulator ein Kabelende in die Vorrichtung einführt und anschliessend wieder herauszieht.

Zweitens werden auch andere Arbeitsvorgänge erlaubt, wie z.B. Sägen, Einschneiden, Vertwisten, Verformen, Crimpen usw. des Kabels durch das Zusammenführen der Messer bzw.

Gemäss einer Weiterbildung der Erfindung ist eine motorische Steuerbarkeit des Anpressdruckes bzw. des Abstandes der Vorschubrollen bzw. Vorschubbänder zueinander vorgesehen. Dies bringt den Vorteil, dass während des Abziehens der Anpressdruck auf das Kabel erhöht werden kann, um so einen Schlupf zu verhindern, bzw. um mehr Kraft auf das Kabel aufzubringen. Würde der Anpressdruck, wie im Stand der Technik bekannt, über den gesamten Vorgang aufrecht erhalten bleiben, hätte das den Nachteil, dass das Kabel bzw. sein Mantel über seine ganze Länge Quetschungen erleidet, die neu so höchstens an einem kleinen Bereich auftreten. Ausserdem wird die Abnutzung des Riemens reduziert. Da der Abziehwiderstand am Anfang der Abziehbewegung in der Regel am grössten ist, kann der Anpressdruck über einen Abziehweg von z.B. 4mm erhöht und anschliessend wieder auf ein geringeres Mass gesenkt werden. Allfällige Markierungen bzw. Quetschungen sind somit auf ca. 4mm beschränkt.

Als weitere mögliche Ausgestaltung ist die individuelle Öffenbarkeit der Rollen bzw. Bänder zu sehen, das heisst, dass die Antriebseinheiten der Bänder sowohl vor als auch nach dem Werkzeughalter voneinander unabhängig geöffnet und geschlossen bzw. in ihrem Anpressdruck eingestellt werden können. Bevorzugt können die Rollen nicht nur im Anpressdruck eingestellt werden und mittels Elektromotor auf einen gewünschten Abstand zueinander gefahren werden, sondern sie können darüber hinaus gegebenenfalls auch vollständig geöffnet werden. Das gekoppelte Öffnen und Schliessen der beiden Rollen- bzw. Bandpaare mit einem einzigen Antriebsmotor und einem Drehteller ist per se bekannt aus einer 1989 veröffentlichten Maschine ATC 9000 der Sutter Electronic AG Thun, Schweiz, deren diesbezügliche Lehre als im Rahmen dieser Erfindung liegend geoffenbart gilt, wobei gegenüber dem Bekannten eine vollständig unabhängige Öffenbarkeit der Rollen bzw. Bänder vorgesehen ist.

Als weiterer Vorteil einer unabhängigen Öffenbarkeit des zweiten Rollen- bzw. Bandpaares von der Öffnung des ersten Rollen- bzw. Bandpaares ist, dass mit Hilfe des ersten Rollenpaares ein Vorabzug von z.B. 130mm durchgeführt werden kann, nachdem das Kabel in gewünschter Länge, z.B. 500mm, durch das zweite Rollenpaar bereits durch ist, so dass auch lange Abisolierlängen, z.B. für Netzkabel, erfolgreich abisoliert werden können. Denkbar ist auch, noch grössere Längen vorabzuziehen, wobei später von Hand der Rest der Isolation vom Leiter abgezogen wird.

Für einen längeren Vollabzug oder längeren Teilabzug könnten umgekehrt nach erfolgtem Vorabzug gemäss obiger Verfahrensangabe, der Anpressdruck des zweiten Rollen- bzw. Bandpaares erhöht und den Mantel unter Haftreibung durch Drehung in Abzugsrichtung vom Leiter abgezogen werden.

Wenn man ein langes Abisolierstück in wenigen Einzelschritten abisolieren will, kann man dies dadurch durchführen, dass bei jedem Teilschritt das zweite Rollen- bzw. Bandpaar geöffnet wird. Gegenüber dem Bekannten (z.B. KODERA Type 36 mit einem besonders grossen Abstand zwischen den linken und rechten Vorschubrollen) hat man den Vorteil, auch kurze Kabelstücke abisolieren zu können. Gegenüber dem Bekannten (z.B. KODERA Type 34 mit einem begrenztem Abstand zwischen den linken und rechten Vorschubrollen) hat man andererseits den Vorteil einer nahezu beliebigen Abisolierlänge und ist überhaupt nicht eingeschränkt auf den Abstand zwischen Werkzeughalter und zweitem, axial dahinterliegenden Rollenpaar, der bisher bei allen bekannten Maschinen den Abisolierabstand begrenzt.

Erwähnenswert liegen im Rahmen der Erfindung auch Ausgestaltungen von Kombinationen gemäss den abhängigen Ansprüchen.

Anhand von beispielhaften Figuren, die für die unterschiedlichen Erfindungsaspekte nicht einschränkend sind, werden bevorzugte Ausführungsbeispiele dargestellt.

Die Figuren sind zusammenhängend und übergreifend beschrieben, da gleiche Bezugszeichen gleiche Bauteile und gleiche Bezugszeichen mit unterschiedlichen Indizes ähnliche Bauteile mit gleichen oder ähnlichen Funktionen bedeuten.

Es zeigen dabei die
- Fig.1: eine Abisoliermaschine mit Rollenantrieb und Modulaufbau;
- Fig.2: Verfahrensschritte zum Abisolieren grösserer Längen;
- Fig.3: symbolische Beispiele unterschiedlicher Modulkonfiguration eines neuartigen Modulaufbaus einer Abisoliermaschine mit Rollenantrieb;
- Fig.4: symbolische Beispiele gemäss Fig.3 jedoch mit Bandantrieb;
- Fig.5a;b: eine Serie von acht unterschiedlichen Verfahrensschritten eines erfindungsgemässen Abisoliervorgangs an einem symbolisch dargestellten Aufbau mit neuartigen Schiebeführungen;
- Fig.6: einen Ausschnitt aus einer neuartigen Abisoliermaschine mit Schiebeführungen gemäss Fig.5;
- Fig.7: den linken Teil einer Draufsicht einer Vorrichtung mit Bandantrieb 12 (Grundriss von Fig. 13) und einem Schwenkantrieb gemäss St.d.T. (EP-A2-234929) für die Führung;
- Fig.8: den rechten Teil derselben Draufsicht;
- Fig.9: analog dazu den linken Teil einer nicht vollständigen Ansicht mit abgenommenem oberen Band und mit einer schwenkbaren Kabelführung vor den Werkzeugen gemäss St.d.T. (EP-A2-234929)

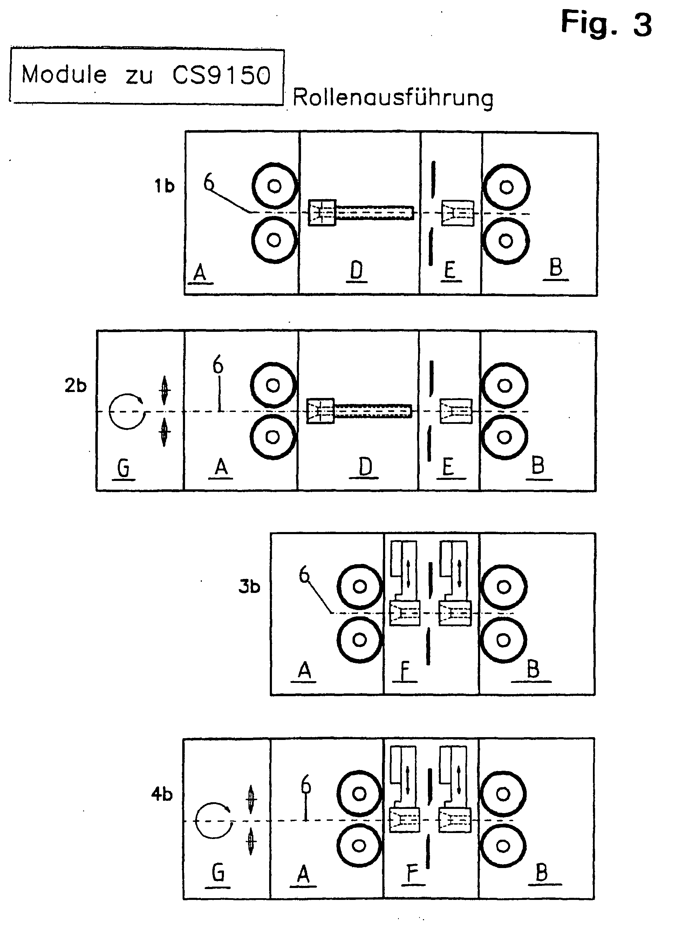

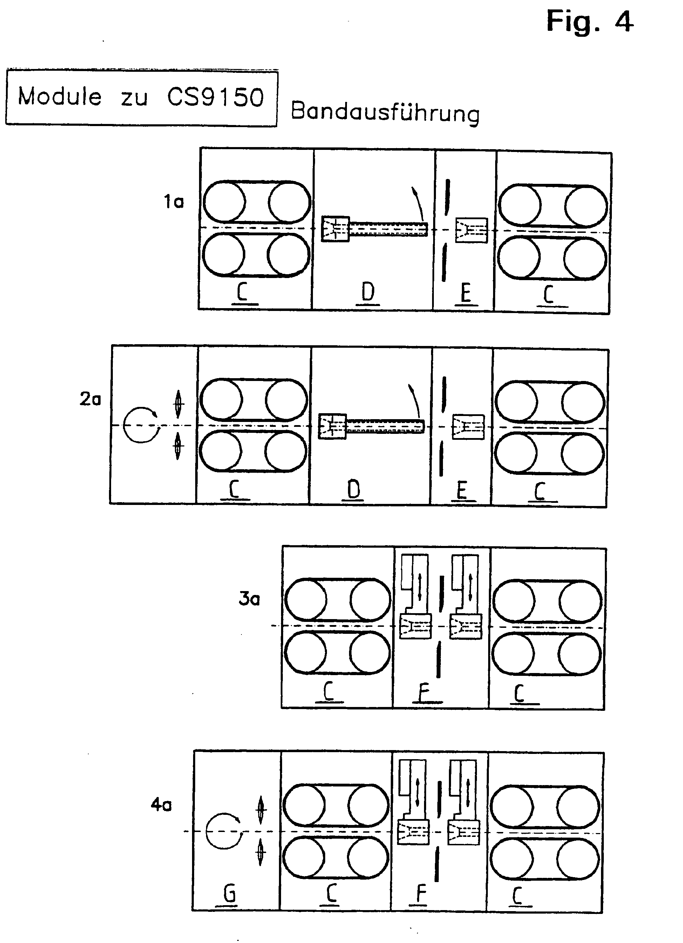

Fig.3 bezieht sich auch auf einen unabhängigen, jedoch bevorzugt bei obigen Kabelverarbeitungsmaschinen einsetzbaren, neuen Aspekt eines modularen Aufbaus einer Abisoliermaschine. Die Beispiele 1b bis 4b zeigen dabei symbolisch Vorschubmodule A und B, die jedoch zum Teil auch ersetzt werden könnten mit anderen Vorschubmodulen , z.B. einem Vorschubmodul C gemäss Fig.4, so dass z.B. ein Vorschubmodul A unter Entfall des Moduls B mit einem Vorschubmodul C ergänzt wird.

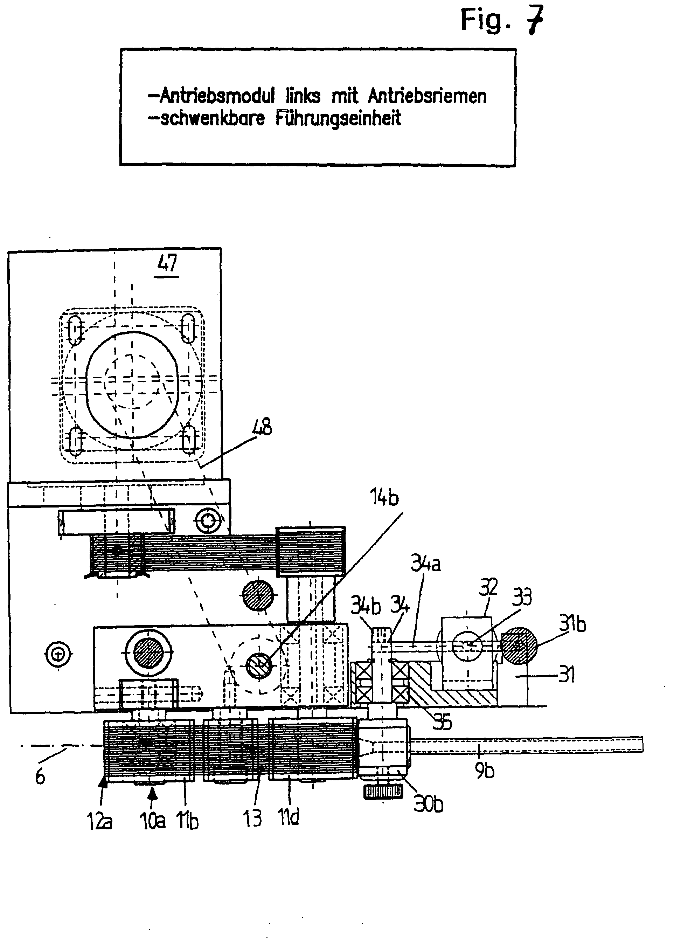

Ein weiters häufig zum Einsatz gelangendes Modul D mit schwenkbarem Führungsrohr kommt vor einem Schneide- bzw. Messermodul E zum Einsatz. Das Messermodul ist so aufgebaut, dass eine weitere starre oder verschiebbare Führung angeordnet ist. Mit Fig.7 wird die Funktion des schwenkbaren Führungsrohres erläutert.

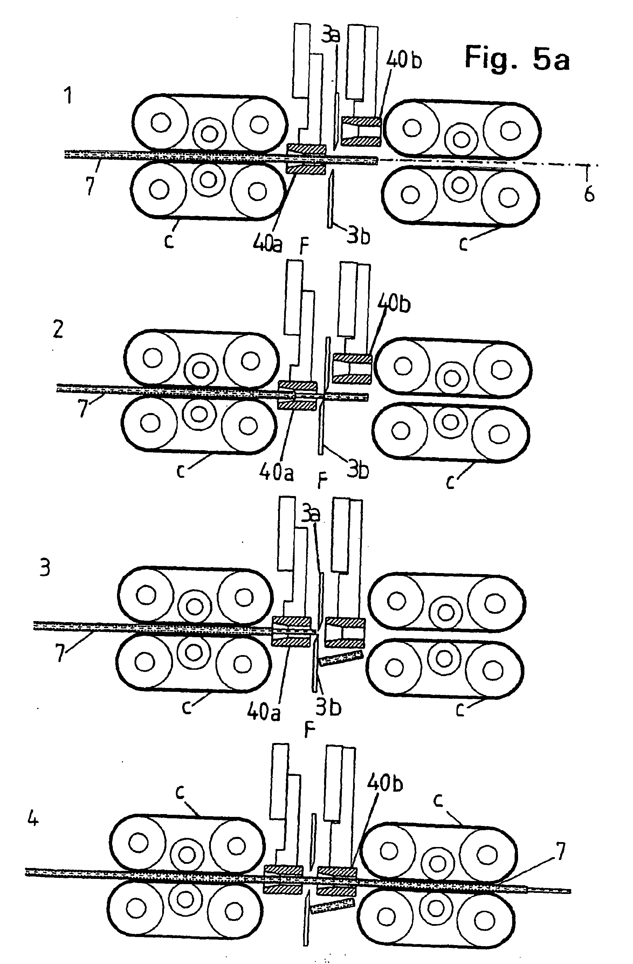

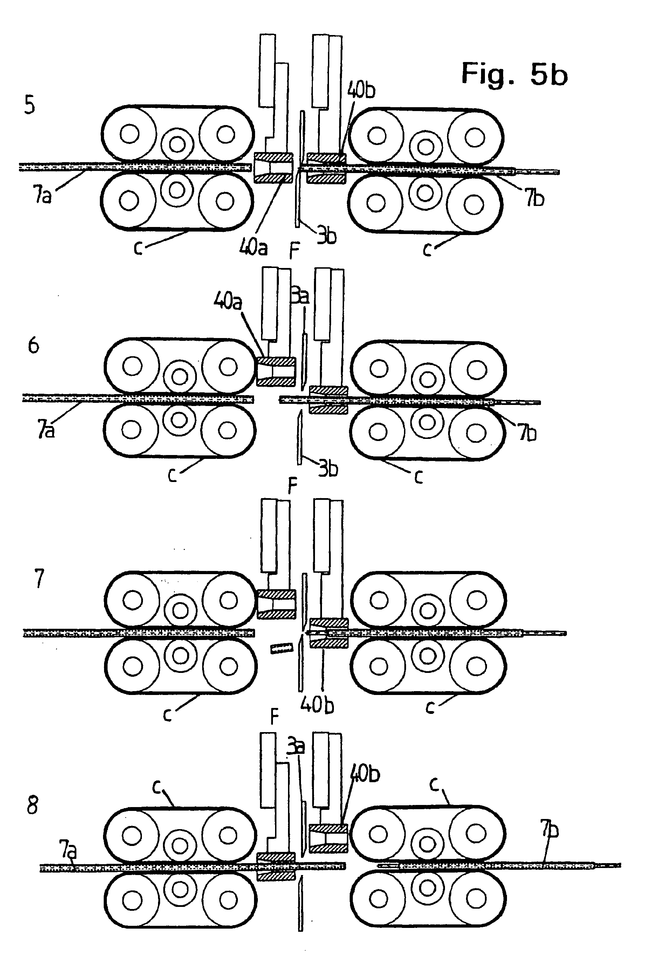

Module D und E können, wie in den Beispielen 3b, 4b sowie 3a und 4a dargestellt, durch ein Modul F ersetzt werden, dass wenigstens eine, vorzugsweise aber, wie dargestellt, zwei verschiebbare Führungen aufweist, die ein neues spezielles Abisolierverfahren ermöglichen, wie mit Fig. 5a und b erläutert wird.

Die Abisoliervorrichtung kann durch beliebige weitere Module ergänzt werden, wobei als Beispiel ein Modul G eingezeichnet ist, das eine "Coax-Box" darstellt, nämlich eine rotativ wirkende Einschneidebox, wie sie insbesondere für Koaxialkabel zum Einsatz gelangen kann. Eine solche Coax-Box ist beispielsweise durch die Schleuniger AG unter der Bezeichnung CA 9170 auf den Markt gebracht worden, weshalb auf deren Aufbau nicht näher einzugehen ist. Der Fachmann kann die diesbezügliche Lehre problemlos von dort übernehmen. Sie gilt somit als im Rahmen dieser Anmeldung liegend geoffenbart.

Entscheidend ist bei diesem Aspekt, dass ein Grundaufbau angeboten wird, der es erlaubt in universeller Art und Weise den Abisolierbedürfnissen zu entsprechen. Der sich daraus ergebende Vorteil liegt zuerst in der Herstellung, da in der Fabrik die Module unabhängig voneinander erzeugt und gelagert werden können. In zweiter Linie ergibt sich ein Vorteil beim Anwender, dessen Abisolierbedürfnisse sich gegebenenfalls mit der Zeit verändern. Mit dem Austausch der entsprechenden Module vor Ort kann die e Vorrichtung nachträglich adaptiert werden.

Die technische Realisierung dieses Aspekts liegt in linearen Führungen im Grundgehäuse, die mit gegengleichen Führungen an den Modulen kooperieren, so dass die Module mit ihren Arbeitselementen zentrisch zur Kabelvorschubachse 6 zu liegen kommen. Dieses erlaubt im Vergleich zum Stand der Technik auch eine raschere Montage kompletter Abisolier- bzw. Kabelbearbeitungsvorrichtungen.

Die in Fig.5a und b gezeigten neuen und vorteilhaften Verfahrensstufen stellen den Kern eines Ausführungsbeispiels dieser Ausscheidungsanmeldung dar: Durch kurze - insbesondere linear -verschiebbare Führungshülsen 40a und b werden die Kabelendstücke jeweils vor dem Einschneiden oder Abisolieren durch die Messer 3a und b zentriert - vorteilhafterweise - in unmittelbarer Messernähe gehalten. Für nicht näher dargestellte Anwendungsfälle ist selbstverständlich im Rahmen der Erfindung auch der Verzicht auf eine der beiden Führungshülsen 40 möglich, insbesondere dann, wenn in der Folge der Band- oder Rollenvorschub näher an die Messer 3 herangerückt wird.

Eine weitere Variation ergibt sich durch den möglichen Ersatz einer Führungshülse 40 mit einem Modul D, wie z.B. in Fig.16 angegeben. Der als Modul C symbolisch dargestellte Bandantrieb kann komplett oder partiell mit Rollenantrieben vertauscht werden.

Die Aspekte der Erfindung, gelten in erfinderischer Weise selbstverständlich auch für Messeranordnungen, bei denen mehrere Messer 3 entlang der Kabelachse (Vorschubachse) 6 versetzt angeordnet sind, wie z.B. im Abisoliermodell CCM 2000 der Sutter Electronic AG.

Solche Kombinationen liessen gegebenenfalls die Verarbeitungsgeschwindigkeit von Kabeln durch die erfindungsgemässen Verfahrensschritte und verschiebbaren Führungshülsen noch steigern.

Im Rahmen eines alternativen Aufbaus können dementsprechend - insbesondere unter Ausnutzung des Modulaspekts auch mehrere Messermodule F mit seitlich verschiebbaren Messern hintereinander vorgesehen sein. Varianten mit dazwischen angeordneten zusätzlichen Vorschubmodulen A, B oder C liegen ebenso im Rahmen der Erfindung.

Eine Weiterbildung der Erfindung betrifft weiters eine neuartige Mess- und Justiervorrichtung für motorisch zusammenfahrbare Backen, insbesondere Schneidebacken an einer Abisoliermaschine. Das Neue ist die Ausnützung einer gewissen Elastizität zwischen Antriebsmotor und einer Vortriebsspindel, die für den Vorschub der Bakken zuständig ist. Die Elastizität kommt durch ein elastisches Kopplungsglied zwischen Antriebsmotor und Spindel zustande, insbesondere ein Zahnriemen der über Riemenscheiben das Drehmoment des Antriebes auf die Spindel überträgt. Neu ist ausserdem, dass an der Spindel direkt ein Messwertaufnehmer, insbesondere ein Encoder (Drehgeber) angebracht ist. Beim Zusammenfahren der Backen wird dem Encoder der Anschlag der Backen dadurch signalisiert, dass die Backen sich nicht mehr weiter zusammen bewegen und die definitive Anschlagstellung somit am Encoder abgelesen oder abgegriffen - bzw. ein Reset signalisiert werden kann. Der Antriebsmotor z.B. ein Schrittmotor kann infolge der Elastizität jedoch geringfügig weiter gegen die Elastizität des Zahnriemens drehen - und sei es nur, um seinen Schwung abzufedern, ohne die Backen mechanisch zu belasten.

Auch aus der Tatsache, dass der eine Messwertaufnehmer (an der Spindel) zum Stillstand gekommen ist und der andere (z.B. Schrittmotor) noch geringfügig weiterdrehen kann, kann auf die Schliessposition der Backen geschlossen werden. In Ergänzung oder als Alternative ist denkbar, das Drehmoment des Antriebsmotors in Schliessnähe zu reduzieren, um die mechanische Belastung stufig an den Schliessbacken zu reduzieren.

Ein, optionaler Zwischenschritt beim Abziehen unter Zuhilfenahme der rechten Bänder mit gesteuertem Anpressdruck führt vorteilhafterweise zu einem Vollabzug langer Isolierstücke mit dem Vorteil, dass ein Überspringen der Abisoliermesser bei starken Haftkräften zwischen Leiter und Isolierung reduziert wird. Dieses ist jedoch nur bei dünnen Kabeln ein Problem, bei stärkeren und vor allem stärkeren Isolationsdicken kommt es beim Bekannten in der Regel sonst zu einem Blockieren des linken Bandantriebes oder zu einem Schlupf der wiederum zu einer Zerstörung der Kabel oder der linken Bänder führen kann.

Die völlig individuelle Einstellbarkeit und Ansteuerbarkeit der vorderen und hinteren Rollen bzw. Bänder erleichtert die Weiterverarbeitung des Kabels, erfordert allerdings auch ausreichend dimensionierte Antriebsmotore und eine geeignete Software, die nach Kenntnis dieser Patentanmeldung einem Durchschnittsfachmann verständlich und realisierbar wird.

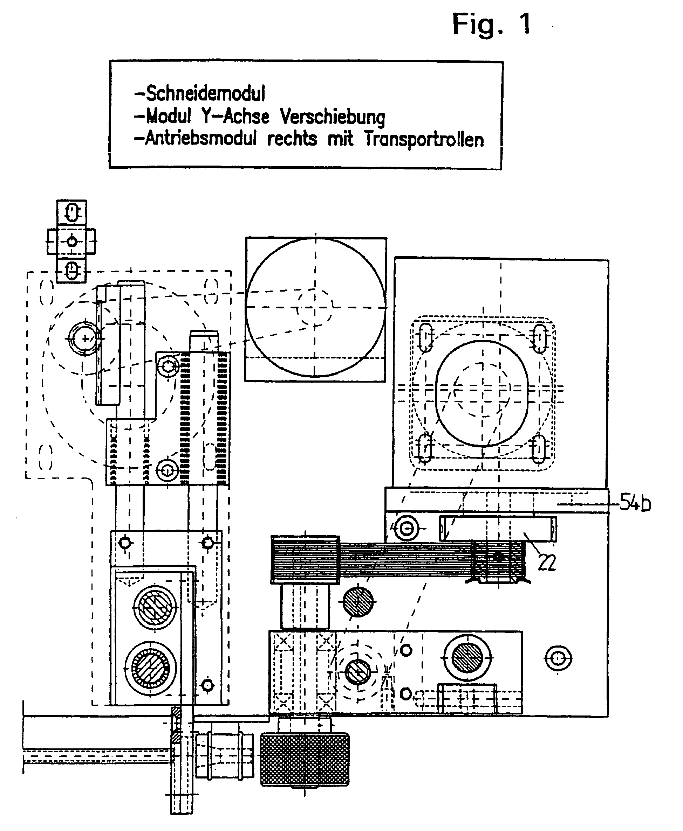

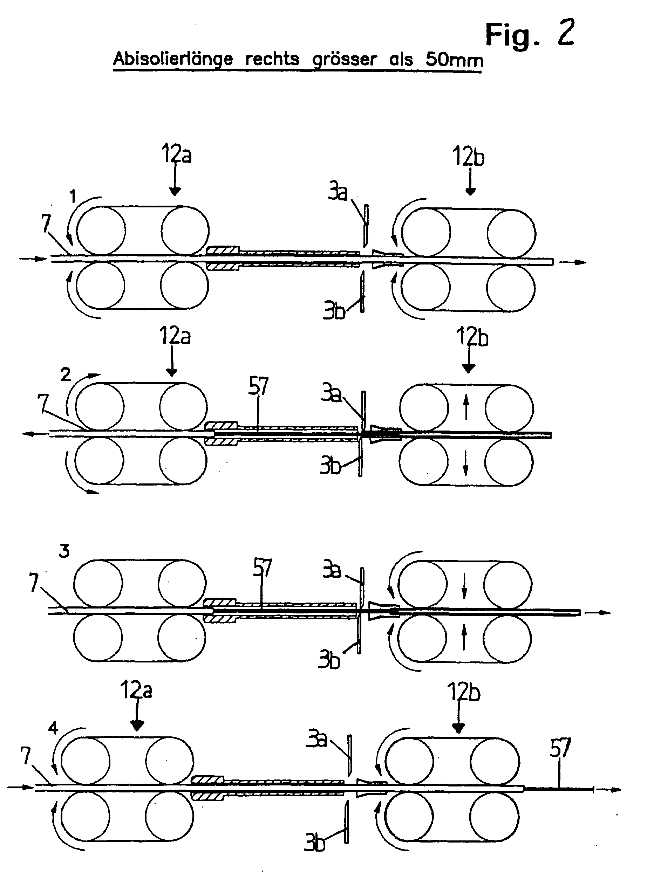

Die bevorzugten Verfahrensschritte gemäss den Schritten 1 bis 8 sind dadurch gekennzeichnet:
1. Einschub des Kabels 7 auf seine vordere Abisolierlänge hinter die Messer 3; Freistellung der hinteren Führungshülse 40b.
2. Schliessen der Messer 3 bis zur Abisoliertiefe und Rückzug des Kabels 7 mittels vorderem Modul C.
3. Positionierung der hinteren Führungshülse 40b, die dabei gleichzeitig - bei Bedarf - das Abfall-Isolationsstück ausstösst, so dass es zu keiner Behinderung im weiteren Ablauf kommt. Gerade dieser Vorgang ist besonders vorteilhaft gegenüber bekannten Lösungen der US-A-4275619, die zweiteilige Führungshülsen anbietet, die zum Zwecke der Abfallentfernung öffnen und mittels zusätzlicher Mechanik den Abfall ausstossen sollen. Da diese bekannten Aufbauten jedoch danach wieder schliessen, kann es erst recht zu einem Verklemmen von Abfallresten zwischen den Führungshülsenteilen kommen, was erfindungsgemäss entfällt. Als Lösung wurde bei einem anderen Stand der Technik vorgesehen, die Hülsen nach unten offen auszubilden, so dass Abzugsmaterial nach unten herausfallen kann. Der Nachteil bei dieser Konstruktion ist, dass Kabel, insbesondere dünne, flexible, an deren Unterseite nicht geführt sind und es daher zu Störungen beim Betrieb kommen kann. Solche Führungen sind z.B. bei dem Abisoliermodell der Firma Kodera/JP "Kodera 34" geoffenbart.
4. Vorschub des Kabels 7 bis zur Schnittposition unter den Messern 3. Im Falle eines Aufbaus gemäss Fig. 1 oder 2, der für die Anwendung dieses neuen Verfahrens nicht obligatorisch ist, sind die Abisoliermesser 3 und die Trennmesser 3 nebeneinander an den verschiebbaren Messerträgern 1 angeordnet, so dass zwischen Schritt 4 und 5 die Trennmesser 3 in Schnittposition geschoben werden, während in den übrigen Schritten die Abisoliermesser 3 in der dargestellten Position sind.
5. Das Kabel 7 wird durchtrennt.
6. Das zweite Kabelstück 7b wird mittels dem hinteren Vorschubmodul C zurückgeschoben bis zur Abisolierposition des hinteren Kabelendes; die vordere Führungshülse 40a ist freigestellt. Letzteres hat u.a. auch den Effekt, dass ein längeres Kabelendstück abisoliert werden kann, dass die Länge zwischen vorderem Modul C und Messer 3 übersteigt. Dieses Kabelendstück kann nämlich - sofern es flexibel genug ist - abgebogen werden, da es durch die vordere Führungshülse 40a seitlich nicht geführt ist. Der selbe Effekt kann bei Bedarf beim Schritt 1-2 auch beim vorderen Kabelende und der Führungshülse 40b ausgenützt werden.
7. Einschneiden und Abziehen des Isolationsstückes (Kabelmantelabfall oder "Slug").
8. Auswurf des beidseitig abisolierten Kabelstückes 7b und Vorschub des nächsten Kabelstückes 7a gemäss Schritt 1.

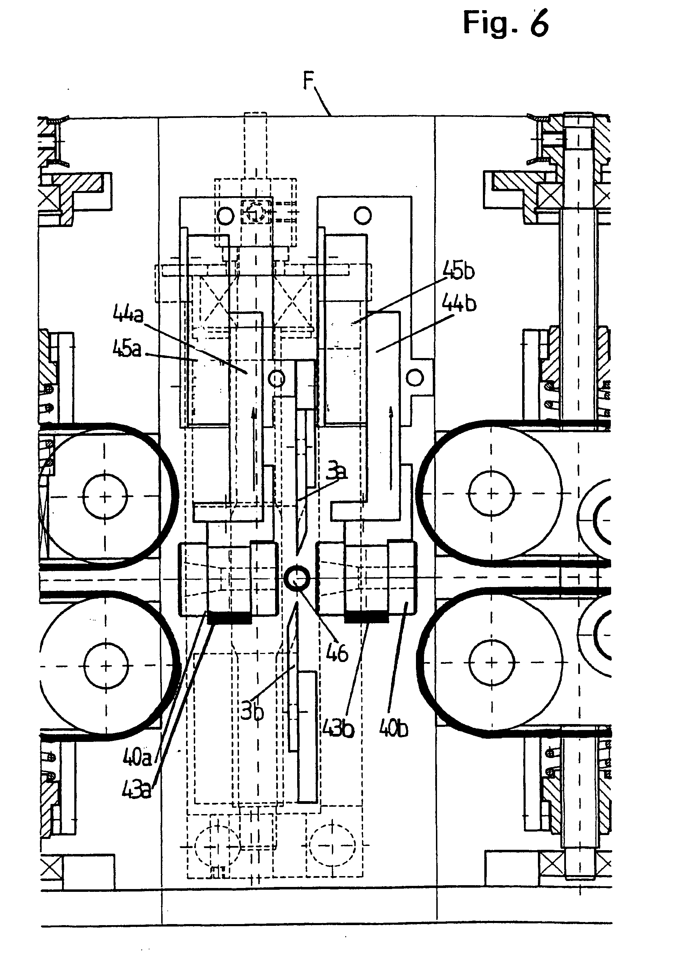

In Fig.6 ist ein Modul F beispielhaft näher dargestellt. Bevorzugt sind die erfindungsgemässen Führungshülsen 40 in Schnappverschlüssen 43 an Führungsstangen 44 gehalten, die rechnergesteuert durch in diesem Beispiel pneumatische - Antriebe 45 gehoben oder gesenkt werden können. Die Schnappverschlüsse ermöglichen ein rasches Wechseln von Führungshülsen 40, um diese an unterschiedliche Kabel anzupassen. Die Führungshülsen 40 sind in ihrem Inneren an einer oder beiden Seiten zur Kabeleinführerleichterung bevorzugt trichterförmig angesenkt. Für bestimmte Anwendungen können sie, wie schon oben erwähnt, mit herkömmlichen Schwenkführungen ersetzt oder auch ganz weggelassen werden.

Sie können auch bei beliebigen anderen Abisoliermaschinen erfolgreich eingesetzt werden; z.B. auch bei herkömmlichen rotativen Abisoliervorrichtungen, anstelle von mitrotierenden Zentrierbacken, wie z.B. in den Modellen 207 der Schleuniger Productronic AG oder den zwischenzeitlich vom Markt genommenen Modellen 9200 der Firma Eubanks Monrovia USA.

Zwischen den Führungshülsen 40 befinden sich die Messer 3 bzw. Kabelbearbeitungswerkzeuge, sowie gegebenenfalls eine Pressluftausblasöffnung 46 zum Reinigen der Werkzeuge.

Bei einem besonderen, neuen, auch unabhängig einsetzbaren Aspekt können die Bandantriebe 12 jedoch auch zum Abziehen der durchtrennten Kabelmantelstücke eingesetzt werden, wobei durch die Anpressdrucksteuerung der Bandantriebe 12 in Abhängigkeit vom Kabelaufbau bei geschlossenen Abisoliermessern, die das Kabel somit halten, die jeweiligen Bänder - in der Regel wird dies das hintere Bandpaar sein - den Kabelmantel in Abzugsrichtung weiterfördern. In einer besonderen Variante können dabei auch die vorderen Bänder in Gegenrichtung laufen und derart mithelfen, in kürzerer Zeit den Leiter aus dem Mantel zu ziehen.

Als weitere Verfahrensvarianten sind Teilabzüge möglich mit anschliessendem Vollabzug mit Hilfe der Bandantriebe, wie eben beschrieben.

Bei besonderen Aufbauten können mit der Vorrichtung parallel auch mehrere Kabel verarbeitet werden, was zu einer grösseren Effektivität führt. Dazu sind dann auch parallele Führungen 40 oder Schwenkführungen 9 vorgesehen.

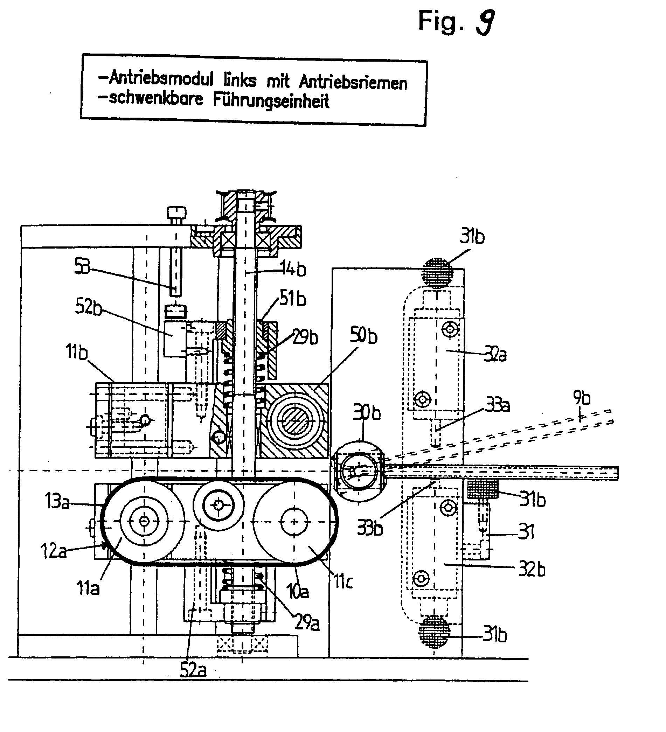

Die Draufsicht gemäss Fig.7 (kompatibel zu Fig.9) zeigt einen vorderen Bandantrieb 12a mit seinen Antriebsrollen 11 b und 11 d fördert ein Kabel entlang der Achse 6 zur verschwenkbaren Führung 9, wie in der EP-A2-234929. Diese verfügt hier über ein Führungsrohr 9b, das auswechselbar in einem Schwenkkörper 30b gehalten ist. Der Schwenkkörper 30b ist mit einer Kurbelstange 34 verbunden, die die Schwenkbewegung vom Antrieb 33 auf das Rohr 9b überträgt, während dem Schwenkkörper 30 bzw. der Kurbelstange 34 ein Anschlag 31 mit Gummipuffer 31 b zur Abdämpfung zugeordnet ist, da bevorzugt die Längsführung 9 mittels schnellwirkenden Verschiebemagneten 32 angetrieben wird, der mit seinem Stössel 33, der gegebenenfalls ebenso mittels Gummipuffer abgedämpft ist, die Führung 9 schlagartig beschleunigt.

Die Kurbelstange ist bei vorliegenden Ausführungsbeispiel zweiteilig ausgebildet, wobei ein Zylinderstift 34a in einer Drehwelle 34b und die wiederum in einem Lager 35 gehalten ist, die mit dem Schwenkkörper 30b verbunden ist. Bei Bedarf kann diese Schwenkführung auch federbelastet sein und/oder um die Achse 6 um 90 oder 180 Grad gedreht angeordnet sein, so dass die Führung 9 nicht nach oben, sondern seitlich oder nach unten ausschwenkt. 47 bezeichnet einen Verstellantrieb für den Bandantrieb 12, der über einen Riemen 48 die Spindel 14b dreht.

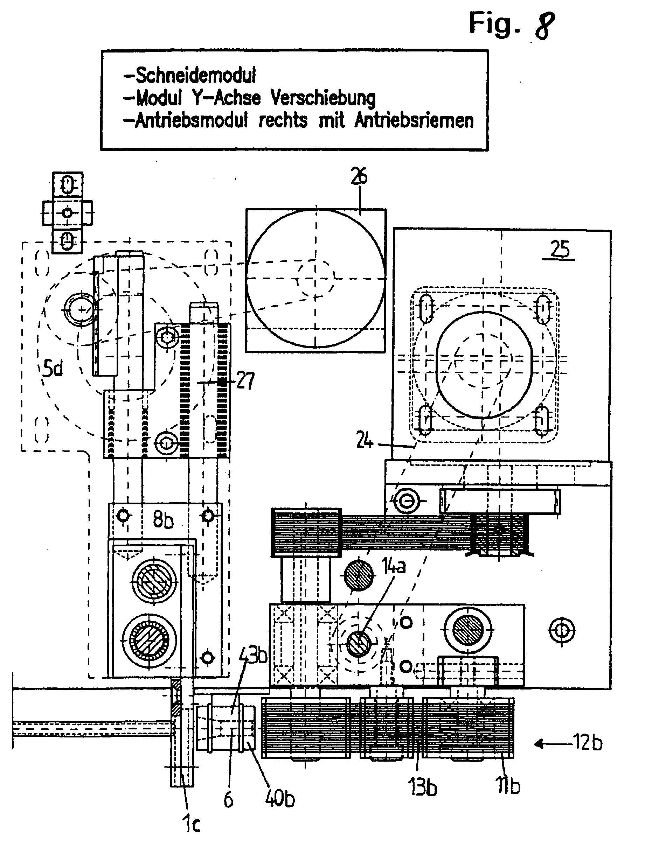

Fig.8 zeigt den rechten Teil desselben Ausführungsbeispiels, wobei 25 den Antrieb und 24 den Riemen für die Einstellung der Spannkraft des Endlosbandantriebes darstellt und mit 26 der gesteuerte (Schritt)motor bezeichnet ist, der das gesteuerte Seitführen der Werkzeughalter 1,2 in den Linearführungen 27 ermöglicht.

Die Führungshülse 40b ist bei dieser Ausführungsvariante nicht verschiebbar jedoch mittels Schnappverschluss 43b leicht entfernbar gehalten. Ein gemeinsamer, mittels Antrieb 5d verschiebbarer Halteteil 8b trägt die Werkzeughalter 1.

Aus Fig.9 ist ein Detail des Bandantriebes 12a für die neue Vorrichtung mit einem Endlosbandpaar 12 mit Bändern (Zahnriemen) 13, Rollen (Zahnrollen) 11a,c und Andrückrollen zu sehen. Die oberen und unteren Bänder sind voneinander vollständig separierbar. Der Anpressdruck zwischen den Bändern 13 steuert sich über die Druckfeder 29, die den Antriebsrollenhaltekörper 50 in Schliessrichtung vorspannt.

Die Vorspannung wird erhöht, indem bei sich berührenden oberen und unteren Bändern 13 die Spindel 14b weiter in Schliessrichtung gedreht wird, so dass die Stellmutter 51 b die Feder 29 weiter komprimiert. Beim Öffnen der Bandantriebe, z.B. für eine Voröffnung zur Vermeidung des verletzenden Anstossens eines Kabels an die Bänder 13, nimmt die Stellmutter 51 b den Antriebsrollenhaltekörper 50b über den Mitnahmeteil 52b mit.

Die Öffnungsbewegung ist mittels justierbarem Anschlag 53 begrenzt. In dieser Position wird vorzugsweise gleichzeitig die Schliessbewegung initialisiert. Die Steuerung erfolgt dabei entweder über einen nicht gezeigten Drehencoder an der Welle 14b oder über den gesteuerten Antrieb 47 gem. Fig.11.
Fig.1 zeigt eine Variante zu Fig.12 mit einem Rollenantrieb mit Rollen 11, die über ein Getriebe 22 bzw. 21 von einem Antrieb 54b angetrieben sind. Die Öffnungsverstellung der Rollen entspricht jener der Bandantriebe 12.
Fig.2 bezieht sich auf ein weiteres neues und erfinderisches Verfahren zum Abisolieren von Kabeln, das bevorzugt mit den oben beschriebenen Aufbauten, aber auch mit anderen bekannten Maschinen neu durchgeführt werden könnte. In vier Verfahrensschritten wird ein Kabel 7 mit einem besonders langen Abisolierstück abisoliert:
   1. Einschieben des Kabels 7 durch Antriebsrotation der Bandantriebe 12 bis zur Abisolierposition unter den Messern 3.
   2. Öffnen des rechten Bandantriebes 12b bis auf den Kabeldurchmesser, so dass das Kabel gerade noch zentriert gehalten wird, jedoch ohne einen Anpressdruck auf dieses auszuüben. Gleichzeitig Einschneiden der Messer 3 auf die Abisoliertiefe; Rückzug des Kabels 7 durch Rückzugsrotation des Bandantriebes 12a bis etwa zu der Position, in der dieser Bandantrieb 12a noch nicht den blanken Leiter 57 berührt.
      Dieses wäre eine Abisolierlänge, die bisher nur mit aufwendigen Teilabzugsschritten erzielt werden konnte.
   3. Klemmung des Kabels 7 durch den Bandantrieb 12a und Abziehrotation des Bandantriebes 12b unter geeignetem Anpressdruck auf den Kabelmantel, so dass dieser vom Leiter 57 vollständig abgezogen wird. Gegenüber dem Bekannten ist somit neu auch ein Vollabzug mit einer dargestellten Abisolierlänge möglich.
   4. Der Fachmann erkennt, dass weitere Schritte möglich wären.

Weitere Details und Varianten der Erfindung sind in den Patentansprüchen beschrieben, bzw. unter Schutz gestellt.

### Bezugszeichenliste

- A - G: austauschbare Module
- a - c: Messervarianten
- 1 a,b: oberer Werkzeugträger
- 2 a,b: unterer Werkzeugträger
- 3 a,b,c,d,e,f,g,h: obere und untere Werkzeuge (Messer o.dgl.)
- 5 a,b,c: Antriebe
- 6: Achse
- 7: Draht
- 9: schwenkbare Führung
- 9b: Führungsrohr
- 10 a,b: Kabelvorschubeinheit
- 11 a-d: Rollenantrieb für Endlosbänder oder direkt zum Antrieb des Kabels
- 12: Endlosbandantrieb
- 13: Endlosband, bevorzugt Zahnriemen mit griffiger Förderseite
- 14 a,b: Spindel für Voreinstellung des Bandantrieb 12
- 16 a,b: Schliessantriebe
- 17: Führung
- 24: Riemen
- 25: Antrieb
- 26: Schrittmotor bzw. gesteuerter Antrieb
- 27: Linearführungen
- 28: Anschlag
- 29: Andrückfedern
- 30 b: Schwenkkörper
- 31: Anschlag
- 3Ib: Gummipuffer
- 32: Verschiebemagnet
- 33: Stössel
- 34: Kurbelstange
- 35: Lager

- 40 a,b: verschiebbare Führungshülsen
- 41: Drehgeber, Encoder
- 42: Induktivsensor o.dgl.
- 43 a,b: Schnappverschluss
- 44 a,b: Führungsstangen
- 45 a,b: Antriebe hier pneumatisch, jedoch auch andere Antriebe möglich
- 46: Pressluftausblasöffnung
- 47: Antrieb, Schrittmotor
- 48: Zahnriemen
- 49: Schnappfedern
- 50: Antriebsrollenhaltekörper
- 51 a,b: Stellmutter
- 52 a,b: Mitnahmekörper

- 57: Leiter

## Patentansprüche

1. Kabelbearbeitungsvorrichtung mit Antriebs- und Bearbeitungsstationen, mit wenigstens einer einteiligen beweglichen Führungshülse (40) vor und/oder nach der Bearbeitungsstation (3), **dadurch gekennzeichnet, dass** die Führungshülse (40) mit einer Ansteuerung verbunden ist, die während des Kabelbearbeitungsbetriebs die Führungshülse (40) fallweise vollständig aus dem Kabelweg bzw. von der Kabelachse (6) verschiebt.

2. Kabelbearbeitungsvorrichtung nach Anspruch 1, **dadurch gekennzeichnet, dass** wenigstens eine Führungshülse (40) an der dem Kabelausgang zugewandten Seite der Bearbeitungsstation (3) angeordnet ist.

3. Kabelbearbeitungsvorrichtung nach Anspruch 1 oder 2, **dadurch gekennzeichnet, dass** die Führungshülse (40) in einer Radialebene zur Kabelachse (6) - vorzugsweise nach oben - abhebbar bzw. weiter bevorzugt linear verschiebbar ist.

4. Kabelbearbeitungsvorrichtung nach einem der vorhergehenden Ansprüche, **dadurch gekennzeichnet, dass** vor und hinter der Bearbeitungsstation (3) je eine Führungshülse (40) und je wenigstens eine Antriebsstation angeordnet ist.

5. Kabelbearbeitungsvorrichtung nach Anspruch 4, **dadurch gekennzeichnet, dass** die Führungen (40) und/oder die Antriebsstationen symmetrisch zur Bearbeitungsstation (3) angeordnet sind.

6. Kabelbearbeitungsvorrichtung nach einem der vorhergehenden Ansprüche, **dadurch gekennzeichnet, dass** auf einer Seite der Bearbeitungsstation eine Führung (49) und auf der anderen Seite der Bearbeitungsstation eine schwenkbare Führung (9) angeordnet ist, die nur eine Seite der Führung aus der Achse (6) des Kabels schwenkt, während die andere Seite in der Achse (6) verbleibt.

7. Kabelbearbeitungsvorrichtung nach einem der vorhergehenden Ansprüchen, **dadurch gekennzeichnet, dass** die Führungseinrichtung eine seitlich oder nach oben bzw. unten entfernbare Führungsvorrichtung (40) aufweist, um das Rückschieben eines bereits jenseits der Werkzeuge (3) liegenden Kabels (7) gegen die Einschubrichtung kollisionsfrei zu ermöglichen.

8. Kabelbearbeitungsvorrichtung nach Anspruch 7, **dadurch gekennzeichnet, dass** jedem Werkzeugträger (1,2) eine eigene Werkzeugträger-Verschubeinrichtung (5a,b) zugeordnet ist, so dass obere und untere Werkzeugpositionen kombinierbar sind.

9. Kabelbearbeitungsvorrichtung nach einem der vorhergehenden Ansprüche, **dadurch gekennzeichnet, dass** die Werkzeughalter (1,2) - gegebenenfalls auch unabhängig voneinander - zueinander bzw. zur oder von der Achse (6) stufenlos verstellbar sind.

10. Kabelbearbeitungsvorrichtung nach einem der vorhergehenden Ansprüche, **dadurch gekennzeichnet, dass** entlang der Achse (6) vor und vorzugsweise auch hinter den Werkzeugen (3) eine Kabelvorschubeinheit (10) vorgesehen ist, die über wenigstens je ein Rollenpaar (11) und/oder über je ein Endlosbandpaar (12) verfügt.

11. Kabelbearbeitungsvorrichtung nach Anspruch 10, **dadurch gekennzeichnet, dass** die einander vis-à-vis der Achse 6 liegenden Rollen (11) oder Endlosbänder (12) - während dem Kabelbearbeitungsvorgang - vorzugsweise stufenlos - zueinander verstellbar sind und insbesondere kabelabhängig vorschubgesteuert öffen- und schliessbar sind (so dass z.B. ein ankommendes Kabel (7) zwischen geöffneten Rollen (11) bzw. Bändern (12) empfangen und mittels zueinander bewegten bzw. geschlossenen Rollen (11) bzw. Bändern (12) weitertransportiert wird) und/oder gegeneinander unter einem - vorzugsweise variier- bzw. steuerbaren - Anpressdruck gehalten sind.

12. Kabelbearbeitungsvorrichtung nach Anspruch 10 oder 11, **dadurch gekennzeichnet, dass** im Falle eines Endlosbandpaares (12) die Endlosbänder (13) um je zwei Rollen (11) geführt sind, denen vorzugsweise wenigstens eine Stützrolle (14) dazwischen zur Unterstützung des Bandes (13) im mittleren Bereich zugeordnet ist, und/oder dass die Bänder (13) an ihrer Innenseite zahnriemenförmig und/oder an ihrer Aussenseite rutschfest ausgebildet sind.

13. Kabelbearbeitungsvorrichtung nach einem der vorhergehenden Ansprüche, **dadurch gekennzeichnet, dass** im Falle von Endlosbandpaaren (12) die Endlosbänder (13) wenigstens eine der Rollen (11) oder eines der Bänder der Paare (12) ersatzlos abnehmbar und/oder durch vorzugsweise beschichtete Antriebsrollen (11) ersetzbar sind.

14. Kabelbearbeitungsvorrichtung nach einem der vorhergehenden Ansprüche, **dadurch gekennzeichnet, dass** wenigstens die oberen und unteren Rollen (11) bzw. Endlosbänder (12) eines Rollenpaares bzw. eines Endlosbandpaares relativ zueinander seitlich verschiebbar sind, so dass auf ein zwischenliegendes Kabel (7) ein Twistvorgang ausübbar ist.

15. Kabelbearbeitungsvorrichtung nach einem der vorhergehenden Ansprüche, **dadurch gekennzeichnet, dass** die Werkzeugträgervorschubeinrichtung (5) wenigstens einen Motor, z.B. einen Schrittmotor (23), insbesondere einen Linearschrittmotor und einen programmierbaren Mikroprozessor zu dessen Ansteuerung und/oder einen Kabelfehlsensor umfasst, und/oder dass mehrere Werkzeugträgervorschubeinrichtungen (5) mit mehreren Werkzeugträgern (1,2) entlang der Achse (6) angeordnet sind.

16. Kabelbearbeitungsvorrichtung nach einem der vorhergehenden Ansprüche, **dadurch gekennzeichnet, dass** die Rollen- oder Bandpaare (11,12) durch Schrittmotore - vorzugsweise über Spindeln - zueinander verstellbar sind, wobei den Motoren eine Steuerung mit automatischem RESET und/oder einer programmierbaren Schaltung und/oder wenigstens ein Druckmesssensor zur Erfassung und/oder messtechnischen Auswertung des Anpressdruckes auf das Kabel (7) zugeordnet sind.

17. Kabelbearbeitungsvorrichtung nach einem der vorhergehenden Ansprüche, **dadurch gekennzeichnet, dass** eine gemeinsame Grundplatte vorgesehen ist, an der entlang der Achse (6) Antriebs- bzw. Vorschub- bzw. Werkzeughalter- und/oder Mess- oder Markiermodule an vorgegebenen Positionen montier- bzw. demontier- oder austauschbar vorgesehen sind.

18. Kabelbearbeitungsvorrichtung nach einem der vorhergehenden Ansprüche, **dadurch gekennzeichnet, dass** dem Rollen- oder Bandvorschub weiters zugeordnet sind eine automatische Einfädelvorrichtung und/oder eine Messvorrichtung für die Zugbelastung am Kabel (7) und/oder eine dynamische Anpressdruckeinrichtung auf die Vorschubrollen (11) bzw. Vorschubbänder (12) insbesondere in Abhängigkeit von der Zugbelastung am Kabel (7) und/oder eine Kabelgeraderichtvorrichtung und/oder ein Längenzählmesswerk und/oder ein Kabelmantel-Auswerfer (gegebenenfalls mittels Pressluft) und/oder eine seitlich öffenbare Kabelführung zum Auswurf von Abisolierresten.

19. Kabelbearbeitungsvorrichtung nach einem der vorhergehenden Ansprüche, **dadurch gekennzeichnet, dass** an einer Verstellspindel (14) für die Werkzeugzustellung ein Encoder (41) angeordnet ist, der im Betriebszustand in Abhängigkeit von der Antriebsbewegung eines Antriebsmotors (23;16) - gegebenenfalls über den Vergleich mit einem vergleichbaren Encoderwert am Encoder dieses Antriebes (23;16) - für diese Verstellspindel (14) deren Drehbewegung überwacht, um ein erfolgtes Schliessen der Werkzeuge (3) zu detektieren und die Antriebsbewegung zu stoppen bzw. den Antrieb oder dessen Encoder zu eichen bzw. zu initialisieren, wobei die Verbindung zwischen Antriebsmotor (23;16) und Spindel (14) vorzugsweise elastisch - insbesondere über einen Zahnriemen (24) gekuppelt ist.

20. Kabelbearbeitungsvorrichtung nach einem der vorhergehenden Ansprüche, **dadurch gekennzeichnet, dass** ein Steuerglied mit Rechner vorgesehen ist, das im Betriebszustand nach Eingabe des Kabeldurchmessers und gegebenenfalls einer Kabeltypenbezeichnung und der gewünschten Abisolierlänge automatisch eine Voröffnung der Bandantriebe (12) und/oder einen Anpressdruck für das Abziehen langer Isolationsstücke berechnet und einstellt bzw. die Antriebe entsprechend steuert.

21. Kabelbearbeitungsvorrichtung nach einem der vorhergehenden Ansprüche, **dadurch gekennzeichnet, dass** dem zweiten Bandantrieb (12b) eine Steuerung und eine Greifvorrichtung zugeordnet ist, wobei erstere den Bandantrieb (12b) sofort nach Abisolation des hinteren Endes des vorderen Kabelabschnittes das Kabel freigibt, so dass es durch die Greifvorrichtung entfernt werden kann.

22. Verfahren für den Betrieb einer Vorrichtung nach einem der vorhergehenden Ansprüche, **dadurch gekennzeichnet, dass** ein Überwachungsglied vorgesehen ist, das den Öffnungszustand der Werkzeughalter (1) überwacht und kurz vor dem Schliessen derselben die Antriebskraft des Antriebsmotors (23;16) reduziert, so dass er die Werkzeughalter mit geringer Kraft in die Schliessposition bringt, wobei diese gegebenenfalls **dadurch** detektiert wird, dass ein mit dem Antriebsmotor (23;16) verbundener oder integrierter Encoder trotz Zuführung von Antriebsenergie seine Schritte (der Drehbewegung) verliert.

## Claims

1. Cable processing device comprising drive and processing stations, having at least one one-part movable guide sleeve (40) before and/or after the processing station (3), **characterized in that** the guide sleeve (40) is connected to an actuation means which displaces the guide sleeve (40) on a case by case basis completely out of the cable path or the cable axis (6) during the cable processing operation.

2. Cable processing device according to Claim 1, **characterized in that** at least one guide sleeve (40) is arranged on that side of the processing station (3) which faces the cable exit.

3. Cable processing device according to Claim 1 or 2, **characterized in that** the guide sleeve (40) can be lifted off - preferably upwards - or more preferably can be linearly displaced in a plane radial to the cable axis (6).

4. Cable processing device according to any of the preceding Claims, **characterized in that** one guide sleeve (40) each and at least one drive station each are arranged in front of and behind the processing station (3).

5. Cable processing device according to Claim 4, **characterized in that** the guides (40) and/or the drive stations are arranged symmetrically with respect to the processing station (3).

6. Cable processing device according to any of the preceding Claims, **characterized in that** a guide (49) is arranged on one side of the processing station and a pivotable guide (9) which swivels only one side of the guide out of the axis (6) of the cable while the other side remains in the axis (6) is arranged on the other side of the processing station.

7. Cable processing device according to any of the preceding Claims, **characterized in that** the guide means has a guide device (40) which can be removed laterally or upwards or downwards in order to permit a cable (7) already present on the other side of the tools (3) to be pushed back in a direction opposite to the insertion direction without collision.

8. Cable processing device according to Claim 7, **characterized in that** a separate tool support feed means (5a, b) is coordinated with each tool support (1, 2) so that upper and lower tool positions can be combined.

9. Cable processing device according to any of the preceding Claims, **characterized in that** the tool holders (1,2) can be continuously adjusted relative to one another or towards or away from the axis (6) - optionally also independently of one another.

10. Cable processing device according to any of the preceding Claims, **characterized in that** a cable feed unit (10) which has at least one pair (11) of rollers each and/or one pair (12) of continuous belts each is provided along the axis (6), in front of and preferably also behind the tools (3).

11. Cable processing device according to Claim 10, **characterized in that** the rollers (11) or continuous belts (12) located opposite one another across the axis (6) can be adjusted - preferably continuously - relative to one another during the cable processing procedure and in particular can be opened and closed depending on the cable and with controlled feed (so that, for example, an approaching cable (7) is received between opened rollers (11) or belts (12) and transported onward by means of rollers (11) or belts (12) moved towards one another or closed) and/or are held against one another under a - preferably variable or controllable - contact pressure.

12. Cable processing device according to Claim 10 or 11, **characterized in that**, in the case of a pair (12) of continuous belts, the continuous belts (13) are guided around two rollers (11) each, with which preferably at least one support roller (14) is coordinated in between for supporting the belt (13) in the middle region, and/or **in that** the belts (13) are formed so as to be in the form of a toothed belt on the inside and/or to be nonslip on the outside.

13. Cable processing device according to any of the preceding Claims, **characterized in that**, in the case of pairs (12) of continuous belts, the continuous belts (13) of at least one of the rollers (11) or of one of the belts of the pairs (12) can be removed without replacement and/or can be replaced by preferably coated drive rollers (11).

14. Cable processing device according to any of the preceding Claims, **characterized in that** at least the upper and lower rollers (11) or continuous belts (12) of a pair of rollers or of a pair of continuous belts are displaceable laterally relative to one another so that a twisting process can be carried out on a cable (7) lying in between.

15. Cable processing device according to any of the preceding Claims, **characterized in that** the tool support feed means (5) comprises at least one motor, for example a stepping motor (23), in particular a linear stepping motor, and a programmable microprocessor for actuation thereof and/or a cable absence sensor, and/or **in that** a plurality of tool support feed means (5) having a plurality of tool supports (1, 2) are arranged along the axis (6).

16. Cable processing device according to any of the preceding Claims, **characterized in that** the pairs (11, 12) of rollers or belts are adjustable relative to one another by stepping motors, preferably via spindles, a control having an automatic RESET and/or a programmable circuit and/or at least one pressure sensor for registering and/or evaluating the measured contact pressure on the cable (7) being coordinated with the motors.

17. Cable processing device according to any of the preceding Claims, **characterized in that** a common base plate is provided, on which drive or feed or tool holder and/or measurement or marking modules are provided at specified positions along the axis (6) in a manner such that said modules can be installed or removed or exchanged.

18. Cable processing device according to any of the preceding Claims, **characterized in that** an automatic threading device and/or a measuring device for the tension relief on the cable (7) and/or a dynamic contact pressure means on the feed rollers (11) or feed belts (12), in particular as a function of the tension relief on the cable (7), and/or a cable straightening device and/or a length counter unit and/or a cable sheath ejector (optionally by means of compressed air) and/or a laterally openable cable guide for ejecting slugs are furthermore coordinated with the roller or belt feed.

19. Cable processing device according to any of the preceding Claims, **characterized in that** an encoder (41) is arranged on an adjusting spindle (14) for the tool feed, which encoder, in the operating state, as a function of the drive movement of a drive motor (23; 16), optionally by comparison with a comparable encoder value on the encoder of this drive (23; 16), monitors the rotational movement of this adjusting spindle (14) in order to detect when closing of the tools (3) is complete and to stop the drive movement or to calibrate or to initialise the drive or the encoder thereof, the connection between drive motor (23; 16) and spindle (14) preferably being elastic - in particular being coupled by means of a toothed belt (24).

20. Cable processing device according to any of the preceding Claims, **characterized in that** a control member having a computer is provided, which control member, in the operating state, after input of the cable diameter and optionally of a cable type designation and of the desired insulation stripping length, automatically calculates and sets a preliminary opening of the belt drives (12) and/or a contact pressure for stripping long insulation sections and controls the guides appropriately.

21. Cable processing device according to any of the preceding Claims, **characterized in that** a control and a gripping device are coordinated with the second belt drive (12b), said control releasing the cable immediately after stripping of insulation from the rear end of the front cable section so that said cable can be removed by the gripping device.

22. Method for operating a device according to any of the preceding Claims, **characterized in that** a monitoring member which monitors the opening state of the tool holders (1) and reduces the drive force of the drive motor (23; 16) shortly before closing of said tool holders is provided, so that said motor brings the tool holders with little force into the closing position, this optionally being detected by virtue of the fact that an encoder connected to or integrated with the drive motor (23; 16) loses its steps (of the rotational movement) in spite of a supply of drive energy.

## Revendications

1. Dispositif de traitement de câble comprenant des stations d'entraînement et de traitement, et avec au moins une douille de guidage (40) d'une seule partie amovible devant et/ou après la station de traitement (3), **caractérisé en ce, que** la douille de guidage (40) est reliée à une unité de commande, qui déplace la douille de guidage (40) suivant le cas pendant l'opération de traitement de câble complètement hors du chemin du câble ou hors de l'axe de câble (6).

2. Dispositif de traitement de câble selon la revendication 1, **caractérisé en ce, qu'**au moins une douille de guidage (40) est disposée au côté en face de la sortie de câble de la station de traitement (3).

3. Dispositif de traitement de câble selon la revendication 1 ou 2, **caractérisé en ce, que** la douille de guidage (40) peut être levée et/ou est linéairement déplaçable ultérieurement dans un plan radial à l'axe de câble (6), de préférence en haut.

4. Dispositif de traitement de câble selon une quelconque des revendications précédentes, **caractérisé en ce, qu'**une douille de guidage (40) et au moins une station d'entraînement sont respectivement disposées devant et derrière la station de traitement (3).

5. Dispositif de traitement de câble selon la revendication 4, **caractérisé en ce, que** les guidages (40) et/ou les stations d'entraînement sont disposés d'une façon symétrique à la station de traitement (3).

6. Dispositif de traitement de câble selon une quelconque des revendications précédentes, **caractérisé en ce, qu'**à un côté de la station de traitement, un guidage (40) est disposé, et à l'autre côté de la station de traitement un guidage pivotant (9) est disposé, qui pivote seulement un côté du guidage hors de l'axe (6) du câble, tandis que l'autre côté reste dans l'axe (6).

7. Dispositif de traitement de câble selon une quelconque des revendications précédentes, **caractérisé en ce, que** le dispositif de guidage comprend un mécanisme de guidage (40) enlevable soit latéralement, soit en haut ou en bas, pour rendre possible de reculer sans collision un câble (7), qui est déjà situé au-delà de l'outil (3), contre la direction d'insertion.

8. Dispositif de traitement de câble selon la revendication 7, **caractérisé en ce, qu'**un dispositif d'avance de porte-outil (5a,b) propre est associé à chaque porte-outil (1, 2), de manière que des positions d'outil supérieures et inférieures peuvent être combinées.

9. Dispositif de traitement de câble selon une quelconque des revendications précédentes, **caractérisé en ce, que** les porte-outils (1, 2) sont ajustables sans gradations l'un par rapport à l'autre et/ou vers ou parti de l'axe (6), le cas échéant aussi indépendamment l'un de l'autre.

10. Dispositif de traitement de câble selon une quelconque des revendications précédentes, **caractérisé en ce, qu'**une unité d'avance de câble (10) est prévue le long de l'axe (6) devant et, de préférence, aussi derrière les outils (3), qui dispose d'au moins d'une paire de poulies (11) et/ou chacun d'une paire de bandes sans fin (12).

11. Dispositif de traitement de câble selon la revendication 10, **caractérisé en ce, que** les poulies (11) ou bandes sans fin (12), situées opposées les unes à les autres de l'axe (6) peuvent être déplacées, de préférence sans gradations, les unes vers les autres pendant l'opération de traitement de câble, et peuvent être ouvertes et fermées, particulièrement en dépendance du câble (de manière qu'un câble (7) arrivant, par exemple, est reçu entre des poulies (11) ou bandes (12) ouvertes, et est transporté ultérieurement au moyens des poulies (11) ou bandes (12) mues les unes vers les autres ou fermées) et/ou qu'elles sont maintenues sous une compression, préférablement variable ou commandable, les unes vers les autres.

12. Dispositif de traitement de câble selon la revendication 10 ou 11, **caractérisé en ce, qu'en** cas d'une paire de bandes sans fin (12), les bandes sans fin (13) sont dirigées autour de deux poulies (11), auxquels au moins un galet support (14) est associé entre eux pour supporter la bande (13) dans sa zone médiane, et/ou que les bandes (13) sont formées à son côté intérieur d'une façon d'un courroie dentée et/ou à son côté extérieur d'une façon antidérapante.

13. Dispositif de traitement de câble selon une quelconque des revendications précédentes, **caractérisé en ce, qu'**en cas d'une paire de bandes sans fin (12), les bandes sans fin (13), au moins une des poulies (11) ou une des bandes des paires (12) peuvent être enlevées sans remplacement et/ou peuvent être remplacées par des poulies d'entraînement (11), préférablement enduites.

14. Dispositif de traitement de câble selon une quelconque des revendications précédentes, **caractérisé en ce, qu'**au moins les poulies (11) ou bandes sans fin (12) supérieures et inférieures d'une paire de poulies ou d'une paire de bandes sans fin sont déplaçables latéralement relativement les unes aux autres, de manière qu'une opération de twist peut être réalisée à un câble (7) situé entre eux.

15. Dispositif de traitement de câble selon une quelconque des revendications précédentes, **caractérisé en ce, que** le dispositif d'avance de porte-outil (5) comprend au moins un moteur, par exemple un moteur pas à pas (23), particulièrement un moteur pas à pas linéaire, et un microprocesseur programmable pour le commander et/ou un capteur de manque de câble, et/ou que plusieurs dispositifs d'avance de porte-outils (5) ayant plusieurs porte-outils (1, 2) sont disposés le long de l'axe (6).

16. Dispositif de traitement de câble selon une quelconque des revendications précédentes, **caractérisé en ce, que** les paires de poulies ou de bandes (11, 12) sont déplaçables les uns vers les autres par des moteurs pas à pas, préférablement au moyens des broches, une unité de commande ayant un RESET automatique et/ou circuit de commande programmable et/ou au moins un capteur de pression pour détecter et/ou évaluer métrologiquement la compression au câble (7) étant associé aux moteurs.

17. Dispositif de traitement de câble selon une quelconque des revendications précédentes, **caractérisé en ce, qu'**une plaque de base est prévue en commun, à laquelle des modules d'entraînement ou d'avance ou de porte-outils et/ou de mesurage ou de marquage sont prévus aux positions données d'une façon montable et démontable ou remplaçable.

18. Dispositif de traitement de câble selon une quelconque des revendications précédentes, **caractérisé en ce, qu'**un dispositif d'enfilement automatique et associé de plus à l'avance à poulies ou à bandes et/ou un dispositif de mesurage pour la charge de traction au câble (7) et/ou un dispositif de compression dynamique aux poulies d'avance (11) ou aux bandes d'avance (12), particulièrement en fonction de la charge de traction au câble (7) et/ou un dispositif de redressement de câble et/ou un instrument de comptage/mesurage de longueur et/ou un éjecteur de gaine de câble (le cas échéant au moyens de l'air sous pression) et/ou un guidage de câble, qui peut être rendu ouvert latéralement, pour éjecter des déchets de dénudage.

19. Dispositif de traitement de câble selon une quelconque des revendications précédentes, **caractérisé en ce, que** l'on a disposé à une tige de réglage (14) pour l'avancement d'outil un encodeur (41), qui dans l'état de service de cette tige de réglage (14) surveille le mouvement rotatif de celle-ci en fonction du mouvement d'entraînement d'un moteur d'entraînement (23; 16), le cas échéant par une comparaison avec un valeur d'encodeur comparable à l'encodeur de cette unité d'entraînement (23; 16), pour détecter la réalisation de la fermeture des outils (3) et pour arrêter le mouvement d'entraînement ou pour étalonner ou initialiser l'unité d'entraînement ou l'encodeur de celle-ci, la connexion entre le moteur d'entraînement (23; 16) et la broche (14) étant, de préférence, couplée d'une manière élastique, particulièrement au moyens d'une courroie dentée (24).

20. Dispositif de traitement de câble selon une quelconque des revendications précédentes, **caractérisé en ce, qu'**un élément de commande incluant un calculateur est prévu, qui calcule et ajuste automatiquement, dans l'état de service après introduction du diamètre de câble et, le cas échéant, d'une désignation du type de câble et de la longueur souhaitée de dénudage, une pré-ouverture des entraînements à bande (12) et/ou une compression pour l'enlèvement des pièces d'isolation longues, et qui commande les entraînements d'une façon correspondante.

21. Dispositif de traitement de câble selon une quelconque des revendications précédentes, **caractérisé en ce, qu'**une commande et un dispositif de griffe sont associés au deuxième unité d'entraînement à bande (12b), la première relâchant l'unité d'entraînement à bande (12b) et le câble immédiatement après le dénudage du bout derrière de la section de câble de devant, de manière qu'il peut être ôté par le dispositif de griffe.

22. Procédé d'opération d'un dispositif selon une quelconque des revendications précédentes, **caractérisé en ce qu'**un élément de surveillance est prévu, qui surveille l'état d'ouverture des porte-outils (1) et réduit la force d'entraînement du moteur d'entraînement (23; 16) brièvement avent la fermeture de ceux-ci, de manière qu'il amène, avec une force petite, les porte-outils dans la position de fermeture, qui est, le cas échéant, détectée en ce, qu'un encodeur relié ou intégré au ou dans le moteur d'entraînement (23; 16) perde ses pas (du mouvement rotatif) malgré de l'alimentation en énergie d'entraînement.
